# EUROPEAN PATENT APPLICATION

(11) **EP 4 738 770 A1**
(43) Date of publication of application: **06.05.2026**
(21) Application number: 23942977.2
(22) Date of filing: 30.06.2023
(51) Int. Cl.: H04L 12/54, H04W 52/02

(54) **WIRELESS COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN); FU, Zhe, Dongguan, Guangdong 523860 (CN); ZHANG, Zhi, Dongguan, Guangdong 523860 (CN)
(74) Representative: Novagraaf Technologies
(86) International application number: PCT/CN2023/104905
(87) International publication number: WO 2025/000476

(57) **Abstract**

Embodiments of the present disclosure provide a wireless communication method and a device. A terminal device can support various capability sets, and can activate some of the capability sets supported by the terminal device. Different capability sets may correspond to different performances, such that more refined terminal energy saving can be realized. The wireless communication method comprises: a terminal device activates N capability sets among M capability sets supported by the terminal device, wherein M and N are both positive integers, M≥2, N=1, or N≥2 and N<M.

## Description

### TECHNICAL FIELD

Embodiments of the present disclosure relate to the technical field of communications, and in particular, relate to a method and device for wireless communication.

### RELATED ART

Currently, power saving may be achieved by scaling down the functionality of a new radio (NR) terminal may be scaled down. This approach achieves power saving or reduced costs at the expense of terminal and network performance. However, current power saving techniques still require further enhancement.

### SUMMARY

Embodiments of the present disclosure provide a method and device for wireless communication. A terminal device supports a plurality of capability sets and may activate some of the capability sets. Since different capability sets corresponds to different performances, more refined power saving may be achieved for the terminal.

According to a first aspect of the embodiments of the present disclosure, a method for wireless communication is provided. The method is performed by a terminal device. The method includes: activating N capability sets in M capability sets supported by the terminal device; wherein M and N are positive integers, M≥2, N=1, or N≥2 and N<M.

According to a second aspect of the embodiments of the present disclosure, a method for wireless communication is provided. The method is performed by a network device. The method includes: acquiring M capability sets supported by the terminal device; determining N capability sets activated in the M capability sets; wherein M and N are positive integers, M≥2, N=1, or N≥2 and N<M.

According to a third aspect of the embodiments of the present disclosure, a communication device is provided. The communication device is a terminal device. The terminal device is configured to perform the method in the first aspect.

Specifically, the terminal device includes a function module configured to perform the method in the first aspect.

According to a fourth aspect of the embodiments of the present disclosure, a communication device is provided. The communication device is a network device. The communication device is configured to perform the method in the second aspect.

Specifically, the network device includes a function module configured to perform the method in the second aspect.

According to a fifth aspect of the embodiments of the present disclosure, a terminal device is provided. The terminal device includes: a processor and a memory configured to store at least one computer program. The processor, when loading and running the at least one computer program from the memory, causes the terminal device to perform the method in the first aspect.

According to a sixth aspect of the embodiments of the present disclosure, a network device is provided. The network device includes: a processor and a memory configured to store at least one computer program. The processor, when loading and running the at least one computer program from the memory, causes the network device to perform the method in the second aspect.

According to a seventh aspect of the embodiments of the present disclosure, an apparatus is provided. The apparatus is configured to perform the method in any of the first aspect or the second aspect.

Specifically, the apparatus includes: a processor. The processor, when loading and running at least one computer program from a memory, causes a device equipped with the apparatus to perform the method in any of the first aspect or the second aspect.

According to an eighth aspect of the embodiments of the present disclosure, a computer-readable storage medium is provided. The computer-readable storage medium is configured to store at least one computer program. The at least one computer program, when loaded and run by a computer, causes the computer to perform the method in any of the first aspect or the second aspect.

According to a ninth aspect of the embodiments of the present disclosure, a computer program product is provided. The computer program product includes at least one computer program instruction. The at least one computer program instruction, when loaded and executed by a computer, causes the computer to perform the method in any one of the first aspect or the second aspect.

According to a tenth aspect of the embodiments of the present disclosure, a computer program is provided. The computer program, when loaded and run by a computer, causes the computer to perform the method in any of the first aspect or the second aspect.

With the above technical solutions, the terminal device supports M capability sets and may activate N capability sets supported by the terminal device. Since different capability sets may correspond to different performances, more refined power saving may be achieved for the terminal.

### BRIEF DESCRIPTION OF DRAWINGS

FIG. 1 is a schematic diagram of a communication system architecture according to some embodiments of the present disclosure;
FIG. 2 is a schematic diagram of a power saving signal according to some embodiments of the present disclosure;
FIG. 3 is a schematic diagram of a power saving signal indicates monitoring a physical downlink control channel (PDDCH) according to some embodiments of the present disclosure;
FIG. 4 is a schematic flowchart of a method for wireless communication according to some embodiments of the present disclosure;
FIG. 5 is a schematic diagram of a communication subsystem according to some embodiments of the present disclosure;
FIG. 6 is a schematic diagram of a capability set according to some embodiments of the present disclosure;
FIG. 7 is a schematic diagram of a capability set with associative relationships according to some embodiments of the present disclosure;
FIG. 8 is a schematic flowchart of another method for wireless communication according to some embodiments of the present disclosure;
FIG. 9 is a schematic block diagram of a terminal device according to some embodiments of the present disclosure;
FIG. 10 is a schematic block diagram of a network device according to some embodiments of the present disclosure;
FIG. 11 is a schematic block diagram of a communication device according to some embodiments of the present disclosure;
FIG. 12 is a schematic block diagram of an apparatus according to some embodiments of the present disclosure; and
FIG. 13 is a schematic block diagram of a communication system according to some embodiments of the present disclosure.

### DETAILED DESCRIPTION

The technical solutions according to the embodiments of the present disclosure are described hereinafter in combination with the accompanying drawings in the embodiments of the present disclosure. It is obvious that the described embodiments are merely part but not all of the embodiments of the present disclosure. All other embodiments derived by those skilled in the art without creative efforts based on the embodiments in the present disclosure are within the protection scope of the disclosure.

The technical solutions according to the embodiments of the present disclosure are applicable to various communication systems, for example, a global system of mobile communication (GSM) system, a code-division multiple access (CDMA) system, a wideband code-division multiple access (WCDMA) system, a general packet radio service (GPRS) system, a long-term evolution (LTE) system, an advanced long-term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area networks (WLAN), an Internet of things (IoT), a wireless fidelity (Wi-Fi), a 5^{th} generation (5G) system, a 6^{th} generation (6G) system, or other communication systems.

In general, traditional communication systems support a limited number of connections and are easy to implement. However, with the development of communication technologies, the mobile communication system supports traditional communications and other communications, for example, device-to-device (D2D) communications, machine-to-machine (M2M) communications, machine type communications (MTC), vehicle-to-vehicle (V2V) communications, sidelink (SL) communications, vehicle-to-everything (V2X) communications, and the like. The embodiments of the present disclosure are applicable to the communication systems.

In some embodiments, the communication system in the embodiments of the present disclosure is applicable to a carrier aggregation (CA) scenario, a dual connectivity (DC) scenario, a standalone (SA) networking scenario, or a non-standalone (NSA) networking scenario.

In some embodiments, the communication system in the embodiments of the present disclosure is applicable to an unlicensed spectrum, wherein the unlicensed spectrum is also construed as a shared spectrum. Alternatively, the communication system in the embodiments of the present disclosure is applicable to a licensed spectrum, and the licensed spectrum is also construed as a non-shared spectrum.

In some embodiments, the communication system in embodiments of the present disclosure is applicable in an FR1 frequency band (corresponding to a band range of 410 MHz to 7.125 GHz), or in an FR2 frequency band (corresponding to a band range of 24.25 GHz to 52.6 GHz), or in new frequency bands such as high frequency bands corresponding to a band range of 52.6 GHz to 71 GHz or a band range of 71 GHz to 114.25 GHz.

The embodiments of the present disclosure are described in conjunction with a network device and a terminal device. The terminal device is also referred to as a user equipment (UE), an access terminal, a subscriber unit, a subscriber station, a mobile station, a mobile, a remote station, a remote terminal, a mobile device, a user terminal, a terminal, a wireless communication device, a user proxy, a user device, or the like.

The terminal device is a station (STA) or a non-access point (non-AP) STA in WLAN, a cellular phone, a cordless phone, a Session Initiation Protocol (SIP) phone, a wireless local loop (WLL) station, a personal digital assistant (PDA) device, a hand-held device with a wireless communication capability, a computing device or other processing devices connected to a wireless modem, an in-vehicle device, a wearable device, a next generation communication system, such as a terminal device in NR, a terminal device in an evolved public land mobile network (PLMN), or the like.

In the embodiments of the present disclosure, the terminal device may be deployed on the land, for example, indoors or outdoors, handheld, wearable, or in vehicles; or the terminal device may be deployed on water (for example, on a ship); or the terminal device is deployed in air (for example, on an airplane, a balloon, or a satellite).

In the embodiments of the present disclosure, the terminal device is a mobile phone, a pad, a computer with a radio transceiver function, a virtual reality (VR) device, an augmented reality (AR) device, a wireless terminal in industrial control, a wireless terminal in self-driving, a wireless terminal in remote medical, a wireless terminal in smart grid, a wireless terminal in transportation safety, a wireless terminal in smart city, a wireless terminal in smart home, an in-vehicle communication device, a wireless communication chip/application specific integrated circuit (ASIC)/system-on-chip (SoC), or the like.

By way of example but not limitation, in the embodiments of the present disclosure, the terminal device may also be a wearable device. The wearable device is also referred to as a wearable smart device, and is a generic name of wearable devices such as glasses, gloves, watches, clothing, and shoes, which are intelligently designed and developed for daily wear by using wearable technologies. The wearable device is a portable device that is directly worn on the body or integrated into clothing or accessories of the user. The wearable device is not only a hardware device, but also implements powerful functions by software support, data interaction, and cloud interaction. The wearable smart device in a broad sense includes devices such as smart watches or smart glasses that have full functionality and large size, and are capable of implementing all or part of functionality without depending on the smart phone, and devices such as various kinds of smart bracelets and smart jewelries for monitoring physical signs, which are dedicated to a specific type of application functions and need to be used in cooperation with other devices such as the smart phone.

In the embodiments of the present disclosure, the network device is a device for communicating with the mobile device, the network device is an access point (AP) in WLAN, a base transceiver station (BTS) in GSM or CDMA, a NodeB (NB) in WCDMA, an evolved NodeB (eNB or eNodeB) in LTE, a relay station or an AP, an in-vehicle device, a wearable device, a network device or a base station (gNB) or a transmission reception point (TRP) in an NR network, or a network device in an evolved PLMN or an NTN.

By way of example but not limitation, in the embodiments of the present disclosure, the network device is mobile. For example, the network device is a mobile device. In some embodiments, the communication device is a satellite or a balloon station. For example, the satellite is a low Earth orbit (LEO) satellite, a medium Earth orbit (MEO) satellite, a geostationary Earth orbit (GEO) satellite, a high elliptical orbit (HEO) satellite, or the like. In some embodiments, the network device is also a base station located on land, water, or the like.

In the embodiments of the present disclosure, the network device provides services for cells, and the terminal device communicates with the network device over the transmission resources (such as frequency domain resources, or spectrum resources) used in the cells. The cell is a cell corresponding to the network device (such as the base station), and the cell may belong to the macro base station or a base station corresponding to a small cell. The small cell may include: a metro cell, a micro cell, a pico cell), or a femto cell, or the like. The small cells have the small coverage and low transmission power, and are suitable for providing high-rate data transmission services.

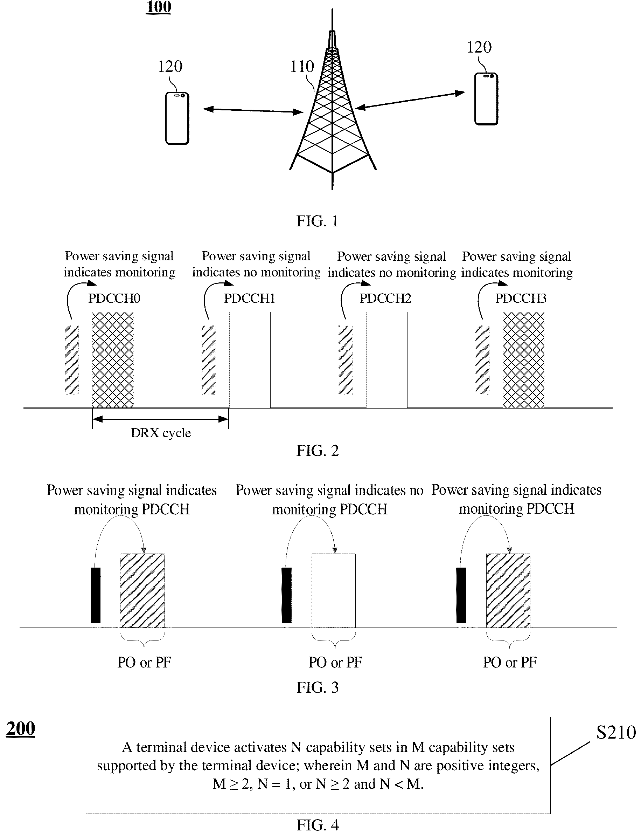

In some embodiments, the communication system 100 applied in the embodiments of the present disclosure is illustrated in FIG. 1. The communication system 100 may include a network device 110. The network device 110 may be a device that communicates with a terminal device 120 (or referred to as a communication terminal or a terminal). The network device 110 may provide communication coverage for a specific geographic area, and may communicate with terminal devices within the coverage.

FIG. 1 illustrates one network device and two terminal devices. In some embodiments, the communication system 100 may include a plurality of network devices and other quantities of terminal devices may be included within the coverage of each of the network devices, which are not limited in the embodiments of the present disclosure.

In some embodiments, the communication system 100 may also include other network entities such as a network controller, a mobility management entity, and the like, which is not limited in the embodiments of the present disclosure.

It should be understood that the devices having communication functions in the network/system in the embodiments of the present disclosure may be referred to as communication devices. Using the communication system 100 illustrated in FIG. 1 as an example, the communication device may include the network device 110 and the terminal device 120 having the communication function. The network device 110 and the terminal device 120 may be specific devices as described above, which are not elaborated herein for brevity. The communication device may also include other devices in the communication system 100, such as the network controller, the mobile management entity, and other network entities, which are not limited in the embodiments of the present disclosure.

It should be understood that the terms "system" and "network" herein are interchangeably used. The term "and/or" herein describes an association between associated objects, and indicates three types of relationships. For example, the phrase "A and/or B" means (A), (B), or (A and B). In addition, the symbol "/" generally indicates an "or" relationship between the associated objects.

The terms used in the embodiments of the present disclosure are intended to explain the specific embodiments of the present disclosure, not to limit the present disclosure. The terms "first," "second," "third," and "fourth," and the like in the specification and claims of the present disclosure and the accompanying drawings are used to distinguish different objects, not to describe a specific order. In addition, the terms "include" and "have" and any variations thereof are intended to cover non-exclusive inclusion.

It should be understood that the term "indicate" in the embodiments of the present disclosure means a direct indication, an indirect indication, or an indication that an association is present. For example, A indicating B means that A indicates B directly, e.g., B may be acquired by A; or that A indicates B indirectly, e.g., A indicates C by which B may be acquired; or that an association is present between A and B.

It should be understood that the term "at least one or at least one of" in the embodiments of the present disclosure means "one or more," and the term "positive integers" in the embodiments of the present disclosure means "values such as 1, 2, 3, and the like," while the term "non-negative integers" in the embodiments of the present disclosure means "values such as 0, 1, 2, 3, and the like." The term "integers" in the embodiments of the present disclosure means "..., -3, -2, -1, 0, 1, 2, 3, and the like," and may be replaced with any possible value based on the requirements of the embodiment.

It should be understood that figures and/or tables shown in the embodiments of the present disclosure are merely illustrative. Specifically, in some cases, some parts of the information contained in the figures and/or tables shown in the embodiments of the present disclosure may individually constitute optional embodiments. For example, each row or column in the table may individually constitute an optional embodiment, which are not limited in the embodiments of the present disclosure.

In the description of the embodiments of the present disclosure, the term "corresponding" means a direct correspondence or an indirect correspondence between two objects, an association between two objects, a relationship of indicating and being indicated, or a relationship of configuring and being configured.

In the embodiments of the present disclosure, the "predefinition" or "pre-configuration" is achieved by pre-storing corresponding codes or tables in the device (for example, including the terminal device and the network device) or other means for indicating relevant information, and the specific implementations are not limited in the present disclosure. For example, the predefinition is defined in the protocol.

In the embodiments of the present disclosure, the "protocol" indicates standard protocols in the field of communications, for example, the LTE protocol, the NR protocol, the Wi-Fi protocol, or evolutions of other protocols related to communication systems. The types of the protocols are not limited in the present disclosure.

For better understanding of the embodiments of the present disclosure, the technology related to the present disclosure is described.

5G technology adopts NR designs, which is based on an underlying air interface technology framework of orthogonal frequency-division multiplexing (OFDM) and multiple-input multiple-output (MIMO) from the LTE, the NR designs have undergone significant technical enhancements and improvements compared to the LTE in terms of system architecture designs. The enhancements include support for a broader frequency range and a wider carrier bandwidth, a flexible frame structure, a diverse parameter set, an optimized reference signal design, a new coding scheme, a symbol-level resource scheduling, an enhanced MIMO capability, a reduced latency, an improved coverage, an enhanced mobility, a terminal/user equipment (UE) power saving, an optimized signaling design, a new network architecture, an enhanced quality of service (QoS) guarantee, a network slicing, a vehicle-to-everything (V2X) connectivity, an industrial Internet of things (IIoT), a new radio-unlicensed (NR-U), and a robust support for various vertical industries.

As the two main driving forces behind the development of 5G, a mobile internet and a mobile IoT offer a promising prospect for the future development of mobile communications. 5G defines three major application scenarios: enhanced mobile broadband (eMBB), ultra-reliable and low latency communication (URLLC), and massive machine-type communication (mMTC). The eMBB is mainly for the mobile internet, while the URLLC and the mMTC are for the mobile IoT. The mobile internet will build a comprehensive information ecosystem centered on users. In recent years, an ultra-high-definition video, a VR, an AR, a remote education, a remote office, a remote medical, a wireless home entertainment, and other services centered on human needs have become increasingly popular. Meanwhile, vertical industries such as a mobile IoT, an IIoT, a V2X, a smart grid, and a smart city are also rapidly transforming toward informatization and digitization. Besides the smart phone, a mobile terminal is taking on more diverse forms, including a wearable device, a camera, a drone, a robot, a vehicle-mounted and ship-mounted terminal module, an industry-customized terminal, and the like.

For better understanding of the embodiments of the present disclosure, power saving technologies for terminal related to the present disclosure are described.

NR standards for 5G ensure extremely high network system data rates to meet the minimum performance requirements for 5G data throughput set by the International Telecommunication Union (ITU) for IMT-2020. Meanwhile, power consumption on the terminal side is also an important performance requirement indicator for IMT-2020. Starting with release 16 (R16), the NR standards have been specifically launched to focus on UEs power saving optimization.

In R16 standards, power saving signals have been introduced to achieve further power savings for UEs in a radio resource control (RRC) connected (RRC_CONNECTED) state. The power saving signals are used in conjunction with discontinuous reception (DRX) mechanisms, and the terminal receives an indication of the power saving wake-up signal before a DRX activate period (DRX ON duration). When the terminal has data transmission during a DRX cycle, the power saving wake-up signal "wakes up" the terminal to monitor the PDCCH during the DRX ON duration. Otherwise, when the terminal has no data transmission during the DRX cycle, the power saving wake-up signal does not "wake up" the terminal, and the terminal does not need to monitor the PDCCH during the DRX ON duration. Compared to the DRX mechanisms, the terminal may omit PDCCH monitoring during the DRX On duration when there is no data transmission, thereby achieving power saving. The time outside the DRX On duration is referred to as a non-active time, and the time during the DRX On duration is referred to as an active time. A process of indicating to the terminal whether to monitor the PDCCH during the DRX On duration via the power saving signals is illustrated in FIG. 2.

In Release 17 (R17) standards, power saving enhancements for the UEs in the RRC_CONNECTED state continue to be strengthened. An enhanced scheme for search space set handover is introduced, along with a power saving scheme that skips PDCCH detection when necessary, i.e., a PDCCH skipping scheme. Meanwhile, the R17 standards also enhance power saving for the UEs in an RRC idle/RRC inactive state. When a UE is in the RRC idle/inactive state, the UE receives paging messages via DRX. During a DRX cycle, there is one paging occasion (PO), and the UE only receives paging messages during the PO. Outside of the PO, the UE does not receive the paging messages, thereby achieving power saving purposes. However, in actual scenarios, the probability of the UE being paged may not be high. The UE periodically detects the PDCCH during a corresponding PO. But if the UE does not detect a paging indication message intended for the UE, there is a waste of power. Like the R16 standards for saving power for the UEs in the connected state, the R17 standards optimize power saving for the UEs in the idle state when receiving the paging messages by introducing similar power saving signals. A power saving signal referred to as paging early indication (PEI) is used to indicate whether the UE is receiving a paging PDCCH at a target PO before the target PO arrives. The power saving signal is carried on a PDCCH channel. The power saving signal based on the PDCCH channel can also carry more power saving information, such as sub-grouping information, which is used to indicate an UE sub-grouping corresponding to the power saving information. A sub-grouping is a further grouping of multiple UEs corresponding to a PO, calculated based on a UE identifier (UE_ID). The sub-grouping information, combined with the power saving information, may more precisely indicate whether the UE needs to receive paging messages at the target PO.

As illustrated in FIG. 3, a power saving signal indicates whether one or more paging sub-groupings of UE receive paging messages on a corresponding paging frame (PF) or PO.

For better understanding of the embodiments of the present disclosure, a reduced-capability terminal (i.e., RedCap UE) related to the present disclosure is described.

Terminals designed for release 15 (R15) and release 16 (R16) support extremely high peak rates. Therefore, capability requirements for the terminals are high, consisting of several major aspects:

The LTE standards define a maximum single carrier bandwidth of 20 MHz, with larger bandwidths achieved through multi-carrier aggregation. 5G NR eventually defined a maximum carrier bandwidth of 100 MHz for a sub-6 GHz band, which is already five times that of the LTE. The maximum carrier bandwidth for an mmWave band is 400 MHz.

Due to support for flexible time domain scheduling and flexible frame structures, processing speeds on terminals are relatively high. Larger subcarrier spacing results in shorter time slots. These factors require NR terminals to achieve the processing speeds that are several times higher than those of LTE terminals.

NR also requires a larger MIMO antenna scale. A reference configuration for the LTE terminals antennas is one transmit and two receive, while NR R15 requires two transmit and four receive antennas at frequencies above 2500 MHz.

R15/R16 of NR also does not support semi-duplex. All terminal devices require full-duplex operation at frequency-division duplex (FDD) frequencies.

These basic capabilities of the NR terminals have high requirements for radio frequency (RF), baseband, and other modules, significantly exceeding the requirements of the LTE terminals. However, in terms of processing capabilities and speeds, some application scenarios of NR do not require such high processing capabilities. These scenarios include applications in IoT, an industrial automation, and a wearable device. In these scenarios, a communication hardware is required to have a lower volume and a power consumption. Lightweight capability requirements are a characteristic of such terminals. Considering this, the NR R17 study has introduced a reduced-capability terminal standard with reduced capability.

The reduced-capability terminal (i.e., RedCap UE) standard reduces some of the mandatory capabilities of the NR R15/16. Corresponding terminal function groups are defined for these capabilities. The RedCap UE standard further optimizes terminals identification, access processes, and power consumption in optimization measurements to suit relevant application scenarios. In addition, the standard for compact terminals explicitly requires that such terminals do not support some complex function groups, such as high reliability and low latency, and carrier aggregation.

R17 and R18 standards define the capabilities of the reduced-capability terminal in terms of a supported bandwidth, a number of antennas, a semi-duplex capability, a measurement capability, a relaxed processing time, and a peak rate.

For better understanding of the embodiments of the disclosure, the problems addressed by the disclosure are described.

Both the power saving technique for terminals and the reduced-capability terminal (RedCap UE) involve scaling down the functionality of the NR terminal defined in R15. These approaches achieve power saving or reduced costs at the expense of terminal and network performance. This is because initial design goals of NR were high bandwidth and high speed, and neither the network nor the terminal were specifically optimized for small data volume services such as IoT, nor took into account how the terminal could be made more power saving. During later stages of standardization, the optimization of these objectives led to increased system design complexities and decreased performances.

At this stage, a terminal device only has one capability set, which is reported by the terminal device when establishing a connection with a network through signaling. For an R15 terminal device, besides meeting minimum requirements for supported bandwidth and antenna numbers, supported bandwidths (bands), features, and other capabilities are also reported as part of the capability set. There is no clear division of hardware resources corresponding to these capabilities within the terminal, resulting in a large, comprehensive terminal that cannot be optimized for power efficiency in specific application scenarios during use. With the introduction of capabilities to reduce terminal power consumption and costs in R16, R17, and R18, new terminal types with corresponding capabilities have emerged, such as RedCap UE. However, to support IoT-type services, specific terminal types are required for achieving. If R15 terminals are still used to achieve IoT services, power consumption of the terminals cannot be effectively reduced.

Based on the problems that exist in solving the terminals power saving, the 6G system design aims to consider how to achieve terminals power saving from the early stages of system design. The present disclosure proposes a new type of multi-capability terminal design scheme, in which, under different service or application scenarios, the terminal starts the corresponding capabilities to communicate with the network, thereby achieving reasonable use of terminal power.

In order to facilitate the understanding of the technical solutions of the embodiments of the present disclosure, a detailed description of the technical solutions of the present disclosure is provided hereinafter with specific embodiments. The following related arts may be combined with the technical solutions according to the embodiments of the present disclosure in any manner, which all fall within the protection scope of the embodiments of the present disclosure. The embodiments of the present disclosure include at least some of the following contents.

FIG. 4 is a schematic flowchart of a method 200 for wireless communication according to some embodiments of the present disclosure. The method 200 for wireless communication may be performed by a terminal device, which may be the terminal device as illustrated in FIG. 1. Specifically, as illustrated in FIG. 4, the method 200 for wireless communication may include at least some of the following contents.

In S210, the terminal device activates N capability sets in M capability sets supported by the terminal device; wherein M and N are positive integers, M≥2, N=1, or N≥2 and N<M.

It should be understood that FIG. 4 illustrates steps or operations of the method 200 for wireless communication, but these steps or operations are merely illustrative, and the embodiments of the present disclosure may also perform other operations or variations of the operations in FIG. 4.

In the embodiments of the present disclosure, M≥2, that is, the terminal device supports a plurality of capability sets, and different capability sets can correspond to different performances, thereby more refined power saving may be achieved for the terminal.

In some embodiments, each capability set in the M capability sets includes at least one of the following information elements: a supported bandwidth, a number of antennas, a semi-duplex capability, a mobility, a processing time, a coding, a modulation scheme, a measurement capability, an air interface technology, a basic parameter set, a receiver architecture, a receiver type, a receiver capability, a maximum transmit power, and a supported feature.

At least some of the information elements in different capability sets in the M capability sets have different values.

Specifically, for example, the air interface technology may include NR, LTE, WCDMA, narrow band internet of things (NB-IoT), MTC, GSM, Wi-Fi, and the like.

Specifically, for example, the basic parameter set may include a subcarrier spacing, a cyclic prefix length, a symbol length, and the like.

Specifically, for example, the receiver type may include an OFDM receiver, a wake-up receiver (WUR).

Specifically, for example, the feature includes a power saving feature, a coverage enhancement feature, a URLLC feature, and the like.

Specifically, for example, the receiver capability includes a receiver sensitivity parameter, and the like.

In some embodiments, when the terminal device activates a capability set, for the network, the terminal device is a terminal type corresponding to the activated capability set.

In some embodiments, when the terminal device activates a capability set, for the network, the terminal device may be in a state corresponding to the activated capability set.

In the embodiment of the present disclosure, the hardware resources within the terminal are trimmable or sliceable. According to the division of the capability set, slicing may be independently activated and used, or may have a correlation, for example, some slicing need to be activated jointly.

In other words, in the embodiment of the present disclosure, a plurality of capability sets need to be sliceable. In some embodiments, the plurality of capability sets may also correspond to multiple slicing requirements, or correspond to different business areas.

In some embodiments, at least some of capability sets in the M capability sets are associated with each other. Specifically, for example, the capability sets that are associated with each other are activated simultaneously. In some embodiments, the association between the capability sets may be defined by a protocol, or the association between the capability sets may be defined by the network configuration.

Specifically, for example, the capability sets supported by the terminal device are capability sets 1, 2, and 3. Capability sets 1 and 3 may be activated independently, while capability set 2 may be activated in conjunction with capability sets 1 or 3, but may not be activated independently.

In some embodiments, in a case where N≥2, the N capability sets are associated capability sets. That is, the terminal device activates the N capability sets that are associated with each other in the M capability sets supported by the terminal device.

In some embodiments, different capability sets in the M capability sets correspond to different services. For example, latency-sensitive services and non-latency-sensitive services correspond to different capability sets. Another example is that gaming services, video services, voice services, and short message services (SMS) correspond to different capability sets.

In some embodiments, activation and/or switching of the capability sets in the M capability sets is based on a currently performed service type. For example, when it is necessary to perform an IoT service, the terminal device activates a capability set corresponding to the IoT service. In another example, when it is necessary to perform the IoT service, the terminal device switches from another capability set to a capability set corresponding to the IoT service.

Specifically, for example, the terminal device may activate N capability sets in the M capability sets supported by the terminal device to meet specific service requirements. Wherein the capabilities contained in the N capability sets may be oriented toward supporting the specific service, such as eMBB, IoT, URLLC, or the like. Taking capability sets corresponding to the IoT as an example, since the primary focus is on small data packet services, which have lower requirements for peak data rates and latency, the terminal device may relax requirements such as the supported bandwidth, the number of antennas, the semi-duplex capability, the mobility, the processing time, and the coding. The hardware resources of the terminal corresponding to the capability set may be activated independently without activating all the hardware resources of the terminal, thereby achieving the goal of reducing power consumption. For example, when performing eMBB services, the terminal device may activate capability sets corresponding to large bandwidths and high peak rates.

In some embodiments, the different capability sets in the M capability sets correspond to different application scenarios. For example, application scenarios such as large data download, small data packet transmission, voice, positioning, sensing, and XR correspond to different capability sets.

In some embodiments, in a case where the different capability sets in the M capability sets correspond to the different application scenarios, activation and/or switching of the capability sets in the M capability sets is based on a current application scenario. For example, when applied to a positioning scenario, the terminal device activates a capability set corresponding to the positioning scenario. As another example, when applied to the positioning scenario, the terminal device switches from another capability set to the capability set corresponding to the positioning scenario.

In some embodiments, the different capability sets in the M capability sets correspond to different radio access technologies. For example, NR, LTE, WCDMA, NB-IoT, MTC, GSM, Wi-Fi, and the like respectively correspond to different capability sets.

In some embodiments, in a case where the different capability sets in the M capability sets correspond to the different radio access technologies, activation and/or switching of the capability sets in the M capability sets is based on a radio access technology currently in use.

Specifically, for example, the capability sets may also be oriented toward different radio access technologies, such as NR, LTE, WCDMA, NB-IoT, MTC, GSM, Wi-Fi, and the like. The different capability sets are activated in response to the different radio access technologies. In other words, air interface technologies supported by the different capability sets may be different.

In some embodiments, the different capability sets in the M capability sets correspond to different hardware resource slicing requirements. Specifically, for example, the hardware resources within the terminal are trimmable or capable of slicing, and may be divided according to the capability sets. The slicing may be independently activated and used, or may have a correlation, such as some slicing requiring joint activation.

In some embodiments, in a case where the different capability sets in the M capability sets correspond to the different hardware resource slicing requirements, activation and/or switching of the capability sets in the M capability sets is based on required hardware resources.

In some embodiments, the different capability sets in the M capability sets correspond to different RRC connection states. The RRC connection states may include an RRC idle state, an RRC inactive state, and an RRC connected state.

In some embodiments, in a case where the different capability sets in the M capability sets correspond to the different RRC connection states, activation and/or switching of the capability sets in the M capability sets is based on a current RRC connection state.

Specifically, for example, when the terminal is in different RRC connection states, different capability sets are activated. For example, when the terminal is in the RRC idle/RRC inactive state, the terminal may be in a low-capability, power-saving state, and the corresponding capability sets need to be activated. The capability sets may maximize power savings while meeting requirements for a connection establishment and a state transition latency. When the terminal is in the RRC connection state, the terminal may activate the corresponding capability sets based on established services. When the terminal undergoes state transitions, the corresponding capability sets may be activated automatically. For example, when the terminal switches to the idle/inactive state, the default capability set may be switched to for working. When the terminal switches to the connection state, the terminal may switch to the corresponding capability set.

In some embodiments, the different capability sets in the M capability sets correspond to different communication parameters. The communication parameters include, but are not limited to, at least one of: a supported band, a number of antennas, a semi-duplex capability, a mobility, a processing time, a coding, a modulation method, a measurement capability, and a transmission delay.

It should be noted that "different communication parameters" may refer to different communication parameters, or same communication parameters with different values.

In some embodiments, in a case where the different capability sets in the M capability sets correspond to the different communication parameters, activation and/or switching of the capability sets in the M capability sets is based on a communication parameter currently in use.

In some embodiments, the different capability sets in the M capability sets correspond to different QoS requirements. In some embodiments, in a case where the different capability sets in the M capability sets correspond to the different QoS requirements, activation and/or switching of the capability sets in the M capability sets is based on a required QoS.

In some embodiments, the different capability sets in the M capability sets correspond to different radio bearers (RBs). In some embodiments, in a case where different capability sets in the M capability sets correspond to the different RBs, activation and/or switching of the capability sets in the M capability sets is based on an established RB.

Specifically, when the network establishes the corresponding wireless bearer, the terminal may activate the corresponding capability set. The wireless bearer and the capability set have a corresponding relationship. Specifically, the network may also indicate to the terminal to activate the corresponding capability set in the corresponding parameters of the wireless bearer. For example, for the RB corresponding to the capability set, specific transmission resources or transmission resource configurations may be used, such as a logical channel (LCH) configuration, a carrier configuration, a medium access control (MAC) configuration, or a physical uplink shared channel (PUSCH) resource. For example, according to the combined capabilities of the terminal, data from different application scenarios may be mapped to different RBs/LCHs/PUSCHs, and the like.

In some embodiments, the different capability sets in the M capability sets correspond to different bandwidth parts (BWP). In some embodiments, in a case where the different capability sets in the M capability sets correspond to the different BWPs, activation and/or switching of the capability sets in the M capability sets is based on activated BWPs.

Specifically, the activation capability sets for the terminal may correspond to the activated BWPs. The network configures the default BWP identity (ID) for the terminal using the default downlink BWP identity (defaultDownlinkBWP-Id) information. In some embodiments, the network configures dormant downlink BWP (dormant DL BWP) for the terminal. These types of BWPs are designed to achieve power saving for the terminal when there is no data scheduling. When the terminal switches to these types of BWPs, corresponding capability sets associated with each BWP type may be activated. When switching to other types of BWPs, different capability sets may be activated.

In some embodiments, the different capability sets in the M capability sets correspond to different terminal operating frequency bands. In some embodiments, in a case where the different capability sets in the M capability sets correspond to the different terminal operating frequency bands, activation and/or switching of the capability sets in the M capability sets is based on an operating frequency band of the terminal device.

Specifically, capability sets activated by the terminal are related to the frequency bands in which the terminal work. For example, in a low frequency band, since the number of beams is low and wireless signal coverage is well, the terminal may activate capability sets corresponding to the low frequency band. In a high frequency band, since the number of beams is high and wireless signal coverage is poor, the terminal may activate capability sets corresponding to the high frequency band.

In some embodiments, the different capability sets in the M capability sets correspond to different communication subsystems. In some embodiments, in a case where the different capability sets in the M capability sets correspond to the different communication subsystems, activation and/or switching of the capability sets in the M capability sets is based on a communication subsystem corresponding to the terminal device.

Specifically, for a communication system with multiple communication subsystems, the terminal communicating under different communication subsystems of the communication system may activate corresponding capability sets.

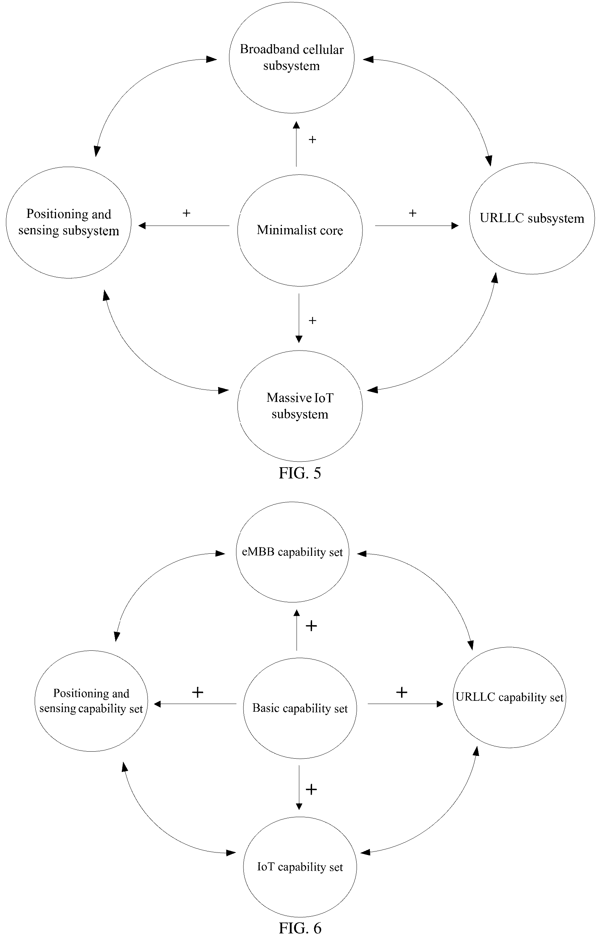

For example, as illustrated in FIG. 5, a communication system may be provided with a minimal minimalist core that offers common capabilities such as native intelligence, security, and flexible spectrum management. The communication system may be optimized for four different capability directions, including clouding, critical IoT, ubiquitous IoT, and sensing. For each capability direction, the communication system designs one or two subsystems, which may independently select key technologies based on application scenarios, spectrum, interface types, and the like, and conduct separate hardware system designs. For example, the communication system may be categorized into: 6G broadband cellular, 6G D2D, 6G URLLC, 6G positioning and sensing, 6G massive IoT, and 6G aerospace communication subsystems. Replace generic and complex traditional software algorithms with black-box, specialized AI algorithm libraries to achieve "relative independence and individual optimization" of each subsystem and significantly simplify communication protocols. By switching and combining various AI algorithms, multiple subsystems may be switched and combined.

As illustrated in FIG. 5, the communication system may include a minimalist core and several communication subsystems, which may be activated simultaneously or switched between each other.

For example, assume that the terminal supports multiple capability sets and may work in different subsystems, such as the 6G broadband cellular, the 6G D2D, the 6G URLLC, the 6G positioning and sensing, the 6G massive IoT, and the 6G aerospace communication. Corresponding to different subsystems, the terminal may activate the corresponding capability sets. As illustrated in Fig. 6, the terminal may include a basic capability set and other specific capability sets, such as an eMBB capability set, a URLLC capability set, an IoT capability set, and a positioning and sensing capability set. According to the business requirements, the terminal may switch between different capability sets or activate multiple capability sets simultaneously.

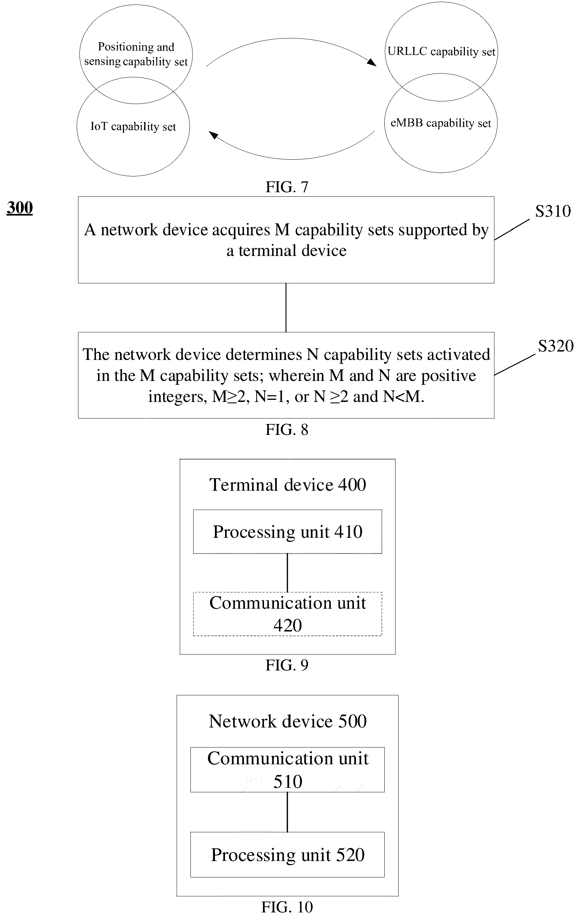

Furthermore, the types of services established by the terminal and the subsystems connected to the terminal may not necessarily correspond one-to-one with the capability sets of the terminal. As mentioned above, the hardware resource slicing corresponding to the capability sets of the terminal may have some correlation, and some slicing need to be activated jointly. In other words, some capability sets are correlated, and resources corresponding to the capability sets cannot be divided into different slicing. In this case, the capability sets are correlated and need to be activated jointly. The interrelated capability sets may be regarded as a larger capability set. For example, as illustrated in Fig. 7, the eMBB capability set and the URLLC capability set are interrelated and need to be activated or deactivated simultaneously. Similarly, the positioning and sensing capability set and the IoT capability set are interrelated and need to be activated or deactivated simultaneously. The eMBB capability set and the URLLC capability set may be treated as a joint capability set supporting eMBB and URLLC. The positioning and sensing capability set and the IoT capability set may be treated as another joint capability set supporting location, sensing, and IoT. The two joint capability sets may be activated independently.

In some embodiments, prior to activating the N capability sets, the terminal device receives first information, wherein the first information is for instructing the terminal device to activate the N capability sets in the M capability sets supported by the terminal device.

In some embodiments, the first information is parameter information for establishing an RB. Specifically, for example, the network device may indicate to the terminal the corresponding capability sets to be activated in the corresponding RB parameter information. For example, for an RB corresponding to a capability set, specific transmission resources or transmission resource configurations may be used, such as an LCH configuration, a carrier configuration, a MAC configuration, PUSCH resources, or the like. For example, according to the capabilities of the terminal, data from different application scenarios may be mapped to different RBs/LCHs/PUSCHs, and the like.

In some embodiments, the first information is carried by non-access stratum (NAS) signaling.

In some embodiments, in a case where the first information is carried by the NAS signaling, the NAS signaling is one of: service request signaling, protocol data unit (PDU) session establishment signaling, NAS signaling during the PDU session establishment process, PDU session modification signaling, or NAS signaling during the PDU session modification process.

In some embodiments, prior to activating the N capability sets, the terminal device reports the M capability sets supported by the terminal device. That is, when the terminal has a plurality of capability sets, the terminal may report the plurality of capability sets to the network.

In some embodiments, the terminal device periodically reports the M capability sets supported by the terminal device. Specifically, for example, a reporting cycle may be agreed upon by a protocol, or a reporting cycle may be configured by the network device.

In some embodiments, the terminal devices reports the M capability sets supported by the terminal device by condition-triggered reporting. Specifically, for example, the trigger conditions may be agreed upon by a protocol, or the trigger conditions may be configured by the network device.

In some embodiments, the terminal devices report the M capability sets supported by the terminal device by event-triggered reporting. Specifically, for example, the triggering events may be agreed upon by a protocol, or the triggering events may be configured by the network devices.

Specifically, for example, the reports of the capability sets of the terminal may be unconditional reports, periodic reports, or condition- or event-triggered reports. For example, reporting when the terminal has not previously reported the aforementioned capability sets, or reporting when the reported capability sets change, or reporting when the reporting timer for the capability sets expire, or reporting when the reported capability sets do not include the updated capability sets, or periodically reporting the capability sets of the terminal.

In some embodiments, the terminal device reports the M capability sets supported by the terminal device via RRC signaling or NAS signaling.

In some embodiments, in a case where the terminal device reports the M capability sets supported by the terminal device via the RRC signaling, the RRC signaling is RRC signaling during an RRC connection establishment process, or the RRC signaling is RRC signaling upon establishment of an RRC connection. Specifically, for example, reports on the capability sets of the terminal may be reported to the network via the RRC signaling, such as during the RRC connection establishment process, or after the RRC connection establishment is complete. For example, the terminals report the capability sets via UE assistance information (UAI).

In some embodiments, in a case where the terminal device reports the M capability sets supported by the terminal device via the NAS signaling, the NAS signaling is one of: service request signaling, PDU session establishment signaling, NAS signaling during the PDU session establishment process, PDU session modification signaling, or NAS signaling during the PDU session modification process. Specifically, for example, reports on the capability sets of the terminal may also be reported to the core network via the NAS signaling, which then sends the reports to the base station. For example, the terminal reports the capability sets in the service request signaling of the NAS signaling, or in the PDU session establishment signaling or process, or in the PDU session modification signaling or process.

In some embodiments, the terminal device reports the M capability sets supported by the terminal device during a random access process.

Specifically, for example, the reports of the capability sets of the terminal may also be indicated during the random access process, such as via message 1 (Msg1), message A (MsgA), message 3 (Msg3), and message B (MsgB) during the random access process. For example, the capability sets of the terminal may be reported in the corresponding RRC messages corresponding to the physical uplink shared channel (PUSCH) of MsgA, the PUSCH of Msg3, or message 5 (Msg5). For example, different capability sets of the terminal may be represented by specific physical random access channel (PRACH) resource locations and/or preambles.

In some embodiments, the terminal device reports the M capability sets supported by the terminal device to a target base station via a source base station. Specifically, the capability sets of the terminal may also be acquired through interaction between base stations, for example, during a handover process.

In some embodiments, activation and switching of the capability sets of the terminal may be dynamically indicated via physical layer signaling or MAC layer signaling. For example, the network may determine the capability sets that need to be activated by the terminals according to the data cache status of the terminal. For example, when the data cache is low or empty, the capability sets of the terminal are switched to capability sets with relatively low capability via the physical layer signaling or the MAC layer signaling. When data arrives at the terminal, the capability sets of the terminal are switched to capability sets with relatively high capability via the physical layer signaling or the MAC layer signaling.

Therefore, in the embodiment of the present disclosure, the terminal devices may support M capability sets and activate N capability sets supported by the terminal device. Since different capability sets may correspond to different performances, more refined power saving may be achieved for the terminal.

Specifically, via the definition, reporting, and switching of multiple capability sets supported by the terminal, the terminal may activate the corresponding capability sets for different services, network subsystems, communication states, and communication parameters to achieve power saving for the terminal. Meanwhile, communications efficiency within the subsystem may be improved, and system complexity may be simplified.

The above describes in detail the terminal side embodiment of the present disclosure in conjunction with FIGS. 4 to 7. The following describes in detail the network side embodiment of the present disclosure in conjunction with FIG. 8. It should be understood that the network side embodiment corresponds to the terminal side embodiment, and similar descriptions may be referred to in the terminal side embodiment.

FIG. 8 is a schematic flowchart of a method 300 for wireless communication according to some embodiments of the present disclosure. The method 300 may be performed by a network device, which may be the network device as illustrated in FIG. 1. Specifically, as illustrated in FIG. 8, the method 300 may include at least some of the following processes.

In S310, the network device acquires M capability sets supported by a terminal device.

In S320, the network device determines N capability sets activated in the M capability sets; wherein M and N are positive integers, M≥2, N=1, or N≥2 and N<M.

It should be understood that FIG. 8 illustrates steps or operations of the method 300 for wireless communication, but these steps or operations are merely illustrative, and the embodiments of the present disclosure may also perform other operations or variations of the operations in FIG. 8.

In the embodiments of the present disclosure, M≥2, that is, the terminal device may support a plurality of capability sets, and different capability sets may correspond to different performances, such that more refined power saving may be achieved for the terminal.

In some embodiments, each capability set in the M capability sets includes at least one of the following information elements: a supported bandwidth, a number of antennas, a semi-duplex capability, a mobility, a processing time, a coding, a modulation scheme, a measurement capability, an air interface technology, a basic parameter set, a receiver architecture, a receiver type, a receiver capability, a maximum transmit power, and a supported feature.

At least some of the information elements in different capability sets in the M capability sets have different values.

Specifically, for example, the air interface technology may include NR, LTE, WCDMA, narrow-band Internet of things (NB-IoT), MTC, GSM, Wi-Fi, and the like.

Specifically, for example, the basic parameter set may include a subcarrier spacing, a cyclic prefix length, a symbol length, and the like.

Specifically, for example, the receiver type may include an OFDM receiver, a wake-up receiver (WUR).

Specifically, for example, the feature includes a power saving feature, a coverage enhancement feature, a URLLC feature, and the like.

Specifically, for example, the receiver capability includes a receiver sensitivity parameter, and the like.

In some embodiments, when the terminal device activates a capability set, for the network, the terminal device is a terminal type corresponding to the activated capability set.

In some embodiments, when the terminal device activates a capability set, for the network, the terminal device may be in a state corresponding to the activated capability set.

In the embodiments of the present disclosure, the hardware resources within the terminal device are trimmable or sliceable. According to the division of the capability set, slicing may be independently activated and used, or may have a correlation, for example, some slices need to be activated jointly.

In other words, in the embodiment of the present disclosure, a plurality of capability sets need to be sliceable. In some embodiments, the plurality of capability sets may also correspond to multiple slicing requirements, or correspond to different business areas.

In some embodiments, at least some of capability sets in the M capability sets are associated with each other. Specifically, for example, the capability sets that are associated with each other are activated simultaneously. In some embodiments, the association between the capability sets may be defined by a protocol, or the association between the capability sets may be defined by the network configuration.

Specifically, for example, the capability sets supported by the terminal device are capability sets 1, 2, and 3. Capability sets 1 and 3 may be activated independently, while capability set 2 may be activated in conjunction with capability sets 1 or 3, but cannot be activated independently.

In some embodiments, in a case where N≥2, the N capability sets are associated capability sets. That is, the terminal device activates the N capability sets that are associated with each other in the M capability sets supported by the terminal device.

In some embodiments, different capability sets in the M capability sets correspond to different services; or different capability sets in the M capability sets correspond to different application scenarios; or different capability sets in the M capability sets correspond to different radio access technologies; or different capability sets in the M capability sets correspond to different hardware resource slicing requirements; or different capability sets in the M capability sets correspond to different RRC connection states; or different capability sets in the M capability sets correspond to different communication parameters; or different capability sets in the M capability sets correspond to different QoS requirements; or different capability sets in the M capability sets correspond to different RBs; or different capability sets in the M capability sets correspond to different BWPs; or different capability sets in the M capability sets correspond to different terminal operating frequency bands; or different capability sets in the M capability sets correspond to different communication subsystems.

In some embodiments, in a case where the different capability sets in the M capability sets correspond to the different services, activation and/or switching of the capability sets in the M capability sets is based on a currently performed service type.

In some embodiments, in a case where the different capability sets in the M capability sets correspond to the different application scenarios, activation and/or switching of the capability sets in the M capability sets is based on a current application scenario.

In some embodiments, in a case where the different capability sets in the M capability sets correspond to the different radio access technologies, activation and/or switching of the capability sets in the M capability sets is based on a radio access technology currently in use.

In some embodiments, in a case where the different capability sets in the M capability sets correspond to the different hardware resource slicing requirements, activation and/or switching of the capability sets in the M capability sets is based on required hardware resources.

In some embodiments, in a case where the different capability sets in the M capability sets correspond to the different RRC connection states, activation and/or switching of the capability sets in the M capability sets is based on a current RRC connection state.

In some embodiments, in a case where the different capability sets in the M capability sets correspond to the different communication parameters, activation and/or switching of the capability sets in the M capability sets is based on a communication parameter currently in use.

In some embodiments, in a case where the different capability sets in the M capability sets correspond to the different QoS requirements, activation and/or switching of the capability sets in the M capability sets is based on a required QoS.

In some embodiments, in a case where different capability sets in the M capability sets correspond to the different RBs, activation and/or switching of the capability sets in the M capability sets is based on an established RB.

In some embodiments, in a case where the different capability sets in the M capability sets correspond to the different BWPs, activation and/or switching of the capability sets in the M capability sets is based on activated BWPs.

In some embodiments, in a case where the different capability sets in the M capability sets correspond to the different terminal operating frequency bands, activation and/or switching of the capability sets in the M capability sets is based on an operating frequency band of the terminal device.

In some embodiments, in a case where the different capability sets in the M capability sets correspond to the different communication subsystems, activation and/or switching of the capability sets in the M capability sets is based on a communication subsystem corresponding to the terminal device.

In some embodiments, the network device receives the M capability sets reported by the terminal device.

In some embodiments, the network device receives the M capability sets reported by the terminal device by periodic reporting.

In some embodiments, the network device receives the M capability sets reported by the terminal device by condition-triggered reporting.

In some embodiments, the network device receives the M capability sets reported by the terminal device by event-triggered reporting.

In some embodiments, the network device receives the M capability sets reported by the terminal device via RRC signaling or NAS signaling.

In some embodiments, in a case where the terminal device reports the M capability sets supported by the terminal device via the RRC signaling, the RRC signaling is RRC signaling during an RRC connection establishment process, or the RRC signaling is RRC signaling upon establishment of an RRC connection.

In some embodiments, in a case where the terminal device reports the M capability sets supported by the terminal device via the NAS signaling, the NAS signaling is one of the following: service request signaling, PDU session establishment signaling, NAS signaling during the PDU session establishment process, PDU session modification signaling, or NAS signaling during the PDU session modification process.

In some embodiments, the network device receives the M capability sets reported by the terminal device during a random access process.

In some embodiments, the network device receives the M capability sets reported by the terminal device via other network devices.

In some embodiments, the network device sends first information, wherein the first information is for instructing the terminal device to activate the N capability sets in the M capability sets supported by the terminal device.

In some embodiments, the first information is parameter information for establishing an RB, or the first information is carried by NAS signaling.

In some embodiments, in a case where the first information is carried by the NAS signaling, the NAS signaling is one of the following: service request signaling, PDU session establishment signaling, NAS signaling during the PDU session establishment process, PDU session modification signaling, or NAS signaling during the PDU session modification process.

Therefore, in the embodiment of the present disclosure, the terminal devices may support M capability sets and activate N capability sets that the terminal devices support. Since different capability sets may correspond to different performances, more refined power saving may be achieved for the terminal.

The above describes in detail the method embodiments of the present disclosure in conjunction with FIGS. 4 to 8. The following describes in detail device embodiments of the present disclosure in conjunction with FIGS. 9 to 13. It should be understood that the device embodiments correspond to the method embodiments, and similar descriptions may be referred to in the method embodiments.

FIG. 9 illustrates a schematic block diagram of a terminal device 400 according to an embodiment of the present disclosure.

As illustrated in FIG. 9, the terminal device 400 includes: a processing unit 410, configured to activate N capability sets in M capability sets supported by the terminal device; wherein M and N are positive integers, M≥2, N=1, or N≥2 and N<M.

In some embodiments, at least some of capability sets in the M capability sets are associated with each other.

In some embodiments, in a case where N≥2, the N capability sets are associated capability sets.

In some embodiments, different capability sets in the M capability sets correspond to different services; or different capability sets in the M capability sets correspond to different application scenarios; or different capability sets in the M capability sets correspond to different radio access technologies; or different capability sets in the M capability sets correspond to different hardware resource slicing requirements; or different capability sets in the M capability sets correspond to different RRC connection states; or different capability sets in the M capability sets correspond to different communication parameters; or different capability sets in the M capability sets correspond to different QoS requirements; or different capability sets in the M capability sets correspond to different RBs; or different capability sets in the M capability sets correspond to different BWPs; or the different capability sets in the M capability sets correspond to different terminal operating frequency bands; or the different capability sets in the M capability sets correspond to different communication subsystems.

In some embodiments, in a case where the different capability sets in the M capability sets correspond to the different services, activation and/or switching of the capability sets in the M capability sets is based on a currently performed service type.

In some embodiments, in a case where the different capability sets in the M capability sets correspond to the different application scenarios, activation and/or switching of the capability sets in the M capability sets is based on a current application scenario.

In some embodiments, in a case where the different capability sets in the M capability sets correspond to the different radio access technologies, activation and/or switching of the capability sets in the M capability sets is based on a radio access technology currently in use.

In some embodiments, in a case where the different capability sets in the M capability sets correspond to the different hardware resource slicing requirements, activation and/or switching of the capability sets in the M capability sets is based on required hardware resources.

In some embodiments, in a case where the different capability sets in the M capability sets correspond to the different RRC connection states, activation and/or switching of the capability sets in the M capability sets is based on a current RRC connection state.

In some embodiments, in a case where the different capability sets in the M capability sets correspond to the different communication parameters, activation and/or switching of the capability sets in the M capability sets is based on a communication parameter currently in use.

In some embodiments, in a case where the different capability sets in the M capability sets correspond to the different QoS requirements, activation and/or switching of the capability sets in the M capability sets is based on a required QoS.

In some embodiments, in a case where different capability sets in the M capability sets correspond to the different RBs, activation and/or switching of the capability sets in the M capability sets is based on an established RB.

In some embodiments, in a case where the different capability sets in the M capability sets correspond to the different BWPs, activation and/or switching of the capability sets in the M capability sets is based on activated BWPs.

In some embodiments, in a case where the different capability sets in the M capability sets correspond to the different terminal operating frequency bands, activation and/or switching of the capability sets in the M capability sets is based on an operating frequency band of the terminal device.

In some embodiments, in a case where the different capability sets in the M capability sets correspond to the different communication subsystems, activation and/or switching of the capability sets in the M capability sets is based on a communication subsystem corresponding to the terminal device.

In some embodiments, prior to activation of the N capability sets, the terminal device 400 further includes: a communication unit 420, configured to receive the first information. The first information is configured to instruct the terminal device to activate the N capability sets in the M capability sets supported by the terminal device.

In some embodiments, the first information is parameter information for establishing an RB, or the first information is carried by NAS signaling.

In some embodiments, in a case where the first information is carried by the NAS signaling, the NAS signaling is one of the following: service request signaling, PDU session establishment signaling, NAS signaling during the PDU session establishment process, PDU session modification signaling, or NAS signaling during the PDU session modification process.

In some embodiments, prior to activation of the N capability sets, the terminal device 400 further includes: a communication unit 420, configured to report the M capability sets supported by the terminal device.

In some embodiments, the communication unit 420 is specifically configured to: periodically report the M capability sets supported by the terminal device; or report the M capability sets supported by the terminal device by condition-triggered reporting; or report the M capability sets supported by the terminal device by event-triggered reporting.

In some embodiments, the communication unit 420 is specifically configured to: report the M capability sets supported by the terminal device via RRC signaling or NAS signaling.

In some embodiments, in a case where the terminal device reports the M capability sets supported by the terminal device via the RRC signaling, the RRC signaling is RRC signaling during an RRC connection establishment process, or the RRC signaling is RRC signaling upon establishment of an RRC connection.

In some embodiments, in a case where the terminal device reports the M capability sets supported by the terminal device via the NAS signaling, the NAS signaling is one of the following: service request signaling, PDU session establishment signaling, NAS signaling during the PDU session establishment process, PDU session modification signaling, or NAS signaling during the PDU session modification process.

In some embodiments, the communication unit 420 is specifically configured to report the M capability sets supported by the terminal device during a random access process.

In some embodiments, the communication unit 420 is specifically configured to report the M capability sets supported by the terminal device to a target base station via a source base station.

In some embodiments, each capability set in the M capability sets includes at least one of the following information elements: a supported bandwidth, a number of antennas, a semi-duplex capability, a mobility, a processing time, a coding, a modulation scheme, a measurement capability, an air interface technology, a basic parameter set, a receiver architecture, a receiver type, a receiver capability, a maximum transmit power, and a supported feature; wherein at least some of the information elements in different capability sets in the M capability sets have different values.

In some embodiments, the communication unit may be a communication interface or transceiver, or an input/output interface of a communication chip or system-on-chip. The processing unit may be one or more processors.

It should be understood that the terminal device 400 according to the embodiment of the present disclosure may correspond to the terminal device in the embodiment of the method of the present disclosure, and the above and other operations or functions of each unit in the terminal device 400 are respectively for achieving the corresponding process of the terminal device in the method 200 illustrated in FIG. 4, and are not elaborated herein for brevity.

FIG. 10 illustrates a schematic block diagram of a network device 500 according to some embodiments of the present disclosure.

As illustrated in FIG. 10, the network device 500 includes: a communication unit 510, the communication unit 510 is configured to acquire M capability sets supported by a terminal device; and a processing unit 520, the processing unit 520 is configured to determine N capability sets activated in the M capability sets; wherein M and N are positive integers, M ≥ 2, N = 1, or N ≥ 2 and N < M.

In some embodiments, at least some of capability sets in the M capability sets are associated with each other.

In some embodiments, in a case where N ≥ 2, the N capability sets are associated capability sets.

In some embodiments, different capability sets in the M capability sets correspond to different services; or different capability sets in the M capability sets correspond to different application scenarios; or different capability sets in the M capability sets correspond to different radio access technologies; or different capability sets in the M capability sets correspond to different hardware resource slicing requirements; or different capability sets in the M capability sets correspond to different RRC connection states; or different capability sets in the M capability sets correspond to different communication parameters; or different capability sets in the M capability sets correspond to different QoS requirements; or different capability sets in the M capability sets correspond to different RBs; or different capability sets in the M capability sets correspond to different BWPs; or different capability sets in the M capability sets correspond to different terminal operating frequency bands; or different capability sets in the M capability sets correspond to different communication subsystems.

In some embodiments, in a case where the different capability sets in the M capability sets correspond to the different services, activation and/or switching of the capability sets in the M capability sets is based on a currently performed service type.

In some embodiments, in a case where the different capability sets in the M capability sets correspond to the different application scenarios, activation and/or switching of the capability sets in the M capability sets is based on a current application scenario.

In some embodiments, in a case where the different capability sets in the M capability sets correspond to the different radio access technologies, activation and/or switching of the capability sets in the M capability sets is based on a radio access technology currently in use.

In some embodiments, in a case where the different capability sets in the M capability sets correspond to the different hardware resource slicing requirements, activation and/or switching of the capability sets in the M capability sets is based on required hardware resources.

In some embodiments, in a case where the different capability sets in the M capability sets correspond to the different RRC connection states, activation and/or switching of the capability sets in the M capability sets is based on a current RRC connection state.

In some embodiments, in a case where the different capability sets in the M capability sets correspond to the different communication parameters, activation and/or switching of the capability sets in the M capability sets is based on a communication parameter currently in use.

In some embodiments, in a case where the different capability sets in the M capability sets correspond to the different QoS requirements, activation and/or switching of the capability sets in the M capability sets is based on a required QoS.

In some embodiments, in a case where different capability sets in the M capability sets correspond to the different RBs, activation and/or switching of the capability sets in the M capability sets is based on an established RB.

In some embodiments, in a case where the different capability sets in the M capability sets correspond to the different BWPs, activation and/or switching of the capability sets in the M capability sets is based on activated BWPs.

In some embodiments, in a case where the different capability sets in the M capability sets correspond to the different terminal operating frequency bands, activation and/or switching of the capability sets in the M capability sets is based on an operating frequency band of the terminal device.

In some embodiments, in a case where the different capability sets in the M capability sets correspond to the different communication subsystems, activation and/or switching of the capability sets in the M capability sets is based on a communication subsystem corresponding to the terminal device.

In some embodiments, the communication unit 510 is specifically configured to receive the M capability sets reported by the terminal device.

In some embodiments, the communication unit 510 is specifically configured to: receive the M capability sets reported by the terminal device by periodic reporting manner; or receive the M capability sets reported by the terminal device by condition-triggered reporting; or receive the M capability sets reported by the terminal device by event-triggered reporting.

In some embodiments, the communication unit 510 is specifically configured to receive the M capability sets reported by the terminal device via RRC signaling or non-access stratum (NAS) signaling.

In some embodiments, in a case where the terminal device reports the M capability sets supported by the terminal device via the RRC signaling, the RRC signaling is RRC signaling during an RRC connection establishment process, or the RRC signaling is RRC signaling after an RRC connection establishment is complete.

In some embodiments, in a case where the terminal device reports the M capability sets supported by the terminal device via the NAS signaling, the NAS signaling is one of the following: service request signaling, PDU session establishment signaling, NAS signaling during the PDU session establishment process, PDU session modification signaling, or NAS signaling during the PDU session modification process.

In some embodiments, the communication unit 510 is specifically configured to receive the M capability sets reported by the terminal device during a random access process.

In some embodiments, the communication unit 510 is specifically configured to receive the M capability sets reported by the terminal device via other network devices.

In some embodiments, the communication unit 510 is also configured to send first information, wherein the first information is for instructing the terminal device to activate the N capability sets in the M capability sets supported by the terminal device.

In some embodiments, the first information is parameter information for establishing an RB, or the first information is carried by NAS signaling.

In some embodiments, in a case where the first information is carried by the NAS signaling, the NAS signaling is one of the following: service request signaling, PDU session establishment signaling, NAS signaling during the PDU session establishment process, PDU session modification signaling, or NAS signaling during the PDU session modification process.

In some embodiments, each capability set in the M capability sets includes at least one of the following information elements: a supported bandwidth, a number of antennas, a semi-duplex capability, a mobility, a processing time, a coding, a modulation scheme, a measurement capability, an air interface technology, a basic parameter set, a receiver architecture, a receiver type, a receiver capability, a maximum transmit power, and a supported feature; wherein at least some of the information elements in different capability sets in the M capability sets have different values.

In some embodiments, the communication unit may be a communication interface or transceiver, or an input/output interface of a communication chip or system-on-chip. The processing unit may be one or more processors.

It should be understood that the network device 500 according to the embodiment of the present disclosure may correspond to the network device in the embodiment of the method of the present disclosure, and the above and other operations or functions of each unit in the network device 500 are respectively for achieving the corresponding process of the terminal device in the method 300 illustrated in FIG. 7, and are not elaborated herein for brevity.

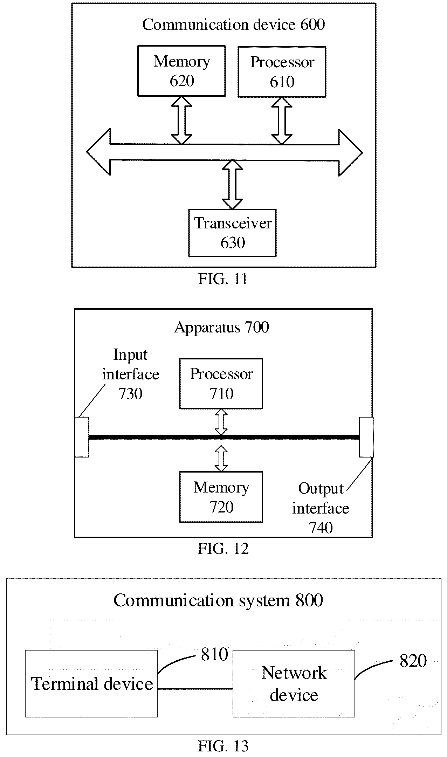

FIG. 11 is a schematic structural diagram of a communication device 600 according to some embodiments of the present disclosure. The communication device 600 illustrated in FIG. 11 includes a processor 610. The processor 610, when calling and running at least one computer program from a memory, is caused to perform the methods according to the embodiments of the present disclosure.

In some embodiments, as illustrated in FIG. 11, the communication device 600 further includes a memory 620. The processor 610, when calling and running at least one computer program from the memory 620, is caused to perform the methods according to the embodiments of the present disclosure.

The memory 620 may be a separate device from the processor 610, or the memory 620 may be integrated into the processor610.

In some embodiments, as illustrated in FIG. 11, the communication device 600 further includes a transceiver 630, wherein the transceiver 630 is controlled by the processor 610 to communicate with other devices. In some embodiments, the transceiver 630 is configured to transmit information or data to other devices or receives information or data from other devices.

The transceiver 630 includes a transmitter and a receiver. The transceiver 630 further includes antennas, wherein the number of antennas may be one or multiple.

In some embodiments, the processor 610 is configured to implement the function of the processing unit in the terminal device, or the processor 610 is configured to implement the function of the processing unit in the network device, which is not elaborated herein for brevity.

In some embodiments, the transceiver 630 is configured to implement the functions of the communication unit in the terminal device, which is not elaborated herein for brevity

In some embodiments, the transceiver 630 is configured to implement the functions of the communication unit in the network device, which is not elaborated herein for brevity.

In some embodiments, the communication device 600 may specifically be the network device according to the embodiments of the present disclosure, and the communication device 600 may perform the corresponding processes achieved by the network device in the various methods according to the embodiments of the present disclosure, which are not elaborated herein for brevity.

In some embodiments, the communication device 600 may specifically be the terminal device according to the embodiments of the present disclosure, and the communication device 600 may perform the corresponding processes achieved by the terminal device in the various methods according to the embodiments of the present disclosure, which are not elaborated herein for brevity.

FIG. 12 is a schematic structural diagram of a device 700 according to some embodiments of the present disclosure. The device 700 illustrated in FIG. 12 includes a processor 710. The processor 710, when calling and running at least one computer program from a memory, is caused to perform the methods according to the embodiments of the present disclosure.

In some embodiments, as illustrated in FIG. 12, the device 700 further includes a memory 720. The processor 710, when calling and running at least one computer program from the memory 720, is caused to perform the methods according to the embodiments of the present disclosure.

The memory 720 is a separate device from the processor 710, or the memory 720 is integrated into the processor 710.

In some embodiments, the processor 710 is configured to implement the function of the processing unit in the terminal device, or the processor 710 is configured to implement the function of the processing unit in the network device, which is not elaborated herein for brevity.

In some embodiments, the device 700 further includes an input interface 730, wherein the input interface 730 is controlled by the processor 710 to communicate with other devices or chips. Specifically, the input interface 730 receives information or data from other devices or chips. In some embodiments, the processor 710 is disposed within the chip or outside the chip.

In some embodiments, the input interface 730 is configured to implement the function of the communication unit in the terminal device, or the input interface 730 is configured to implement the function of the communication unit in the network device.

In some embodiments, the device 700 may also include an output interface 740. The processor 710 is configured to control the output interface 740 to communicate with other devices or chips, specifically, the processor 710 is configured to output information or data to other devices or chips. Optionally, the processor 710 is configured to be disposed inside or outside the chip.

In some embodiments, the input interface 740 is configured to achieve the function of the communication unit in the terminal device, or the input interface 740 is configured to achieve the function of the communication unit in the network device.

In some embodiments, the device is applied to the network device according to the embodiments of the present disclosure, and the apparatus achieves the corresponding processes achieved by the network device in the various methods according to the embodiments of the present disclosure, which are not elaborated herein for brevity.

In some embodiments, the device is applied to the terminal device according to the embodiments of the present disclosure, and the apparatus performs the corresponding processes achieved by the terminal device in the various methods according to the embodiments of the present disclosure, which are not elaborated herein for brevity.

In some embodiments, the device in the embodiments of the present disclosure may be a systematic chip, a system chip, a chip system, a system-on-chip, or the like.

FIG. 13 is a schematic block diagram of a communication system 800 according to some embodiments of the present disclosure. As illustrated in FIG. 13, the communication system 800 includes a terminal device 810 and a network device 820.

The terminal device 810 is configured to perform the corresponding function achieved by the terminal device in the methods described above, and the network device 820 is configured to implement the corresponding function achieved by the network device in the methods described above, which are not elaborated herein for brevity.

It is understandable that the processor according to the embodiments of the present disclosure is an integrated circuit chip with signal-processing capabilities. In implementation, the processes of the method embodiments described above are performed by integrated logic circuits of hardware in the processor or by instructions in the form of software. The above-described processor is a general-purpose processor, a digital signal processor (DSP), an application-specific integrated circuit (ASIC), a field-programmable gate array (FPGA) or other programmable logic device, a discrete gate or transistor logic device, or a discrete hardware component. Various methods, processes, and logic block diagrams according to the embodiments of the present disclosure are implemented or performed. The general-purpose processor is a microprocessor or the processor is any conventional processor. The processes of the methods disclosed in conjunction with the embodiments in the present disclosure are directly embodied as being performed by a hardware decoding processor, or performed with a combination of hardware and software modules in a decoding processor. The software module is configured in a random memory, a flash memory, a read-only memory, a programmable read-only memory or an electrically erasable programmable memory, a register, or other storage medium well established in the art. The storage medium is configured in a memory, and the processor reads information from the memory to perform the processes of the above methods in conjunction with the hardware.

It is understandable that the memory according to the embodiments of the present disclosure is a volatile memory or a non-volatile memory, or the memory includes both the volatile memory and the non-volatile memory. The non-volatile memory is a read-only memory (ROM), a programmable ROM (PROM), an erasable PROM (EPROM), an electrically EPROM (EEPROM), or a flash memory. The volatile memory is a random-access memory (RAM), wherein the RAM is configured as an external cache. By way of illustration, but not limitation, many forms of RAMs are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), or a direct rambus RAM (DR RAM). It should be noted that the memory in the system and method described herein is intended to include, but is not limited to, these and any other suitable types of memory.

It is understandable that the above memories are exemplary but not limiting descriptions. For example, the memory according to the embodiments of the present disclosure is an SRAM, a DRAM, an SDRAM, a DDR SDRAM, an ESDRAM, an SLDRAM, or a DR RAM. That is, the memory according to the embodiments of the present disclosure is intended to include, but is not limited to, these and any other suitable types of memory.

Some embodiments of the present disclosure further provide a computer-readable storage medium for storing at least one computer program.

In some embodiments, the computer-readable storage medium is applied to the network device according to the embodiments of the present disclosure. The at least one computer program, when loaded and run by a computer, causes the computer to perform the corresponding processes performed by the network device in the various methods according to the embodiments of the present disclosure, which are not described herein for brevity.

In some embodiments, the computer-readable storage medium is applied to the terminal device according to the embodiments of the present disclosure. The at least one computer program, when loaded and run by a computer, causes the computer to perform the corresponding processes performed by the terminal device in the various methods according to the embodiments of the present disclosure, which are not described herein for brevity.

Some embodiments of the present disclosure further provide a computer program product including at least one computer program instruction.

In some embodiments, the computer program product is applied to the network device according to the embodiments of the present disclosure. The at least one computer program instruction, when loaded and executed by a computer, causes the computer to perform the corresponding processes performed by the network device in the various methods according to the embodiments of the present disclosure, which are not repeated herein for brevity.

In some embodiments, the computer program product is applied to the terminal device according to the embodiments of the present disclosure. The at least one computer program instruction, when loaded and executed by a computer, causes the computer to perform the corresponding processes performed by the terminal device in the various methods according to the embodiments of the present disclosure, which are not repeated herein for brevity.

Some embodiments of the present disclosure further provide a computer program.

In some embodiments, the computer program is applied to the network device according to the embodiments of the present disclosure. The computer program, when loaded and run on a computer, causes the computer to perform the corresponding processes performed by the network device in the various methods according to the embodiments of the present disclosure, which are not repeated herein for brevity.

In some embodiments, the computer program is applied to the terminal device according to the embodiments of the present disclosure. The computer program, when loaded and run on a computer, causes the computer to perform the corresponding processes performed by the terminal device in the various methods according to the embodiments of the present disclosure, which are not repeated herein for brevity.

It should be noted by those skilled in the art that the units and algorithmic processes described in conjunction with the various examples of the embodiments disclosed herein may be performed by electronic hardware or a combination of computer software and electronic hardware. Whether these functions are performed in hardware or software depends on the particular application and design constraints of the technical solution. Those skilled in the art may use different methods to implement the described functions for each particular application, but such implementations should not be considered outside the scope of this application.

It should be clear to those skilled in the art that for the convenience and brevity of description, the specific working processes of the systems, apparatuses, and units described above are referred to the corresponding processes in the above method embodiments, which are not elaborated herein for brevity.

In the several embodiments provided in the present disclosure, it is understandable that the systems, apparatuses, and methods disclosed may be performed in other ways. For example, the above-described embodiments of the apparatus are merely schematic. For example, the division of the units described herein is merely a logical functional division, and in practice, the units may be divided in other ways. For example, a plurality of units or components may be combined or may be integrated into another system, or some features may be ignored, or not implemented. In addition, the coupling or direct coupling or communication connection between each other illustrated or discussed may be achieved via some interfaces, an indirect coupling or communication connection between devices or units may be electrical, mechanical, or otherwise.

The units illustrated as separated components may or may not be physically separated, and components shown as units may or may not be physical units. That is, the units or components may be arranged in a single place or may be distributed to a plurality of network units. Some or all of these units may be selected to fulfill the purpose of the present embodiment scheme based on actual needs.

In addition, the functional units in various embodiments of the present disclosure may be integrated into a single processing unit, or each unit may be physically present separately, or two or more units may be integrated into a single unit.

The function may be stored in a computer-readable storage medium in a case where the function is implemented as a software functional unit and sold or used as a separate product. With this understanding, the essence of the technical solution of the present application, a part of the technical solution which contributes to the related art, or a part of the technical solution may be embodied in the form of a software product. The computer software product is stored in a storage medium including several instructions to cause a computer device (which may be a personal computer, a server, or a network device) to perform all or part of the processes of the method described in various embodiments of the present disclosure. The aforementioned storage medium includes a USB flash drive, a removable hard disk, a ROM, a RAM, a diskette, a flash disk, or other medium that store program codes.

Described above are merely specific embodiments of the present disclosure, but the protection scope of the present disclosure is not limited thereto. Those skilled in the art who are familiar with the technical field would readily envisage variations or substitutions within the scope of the technology disclosed in the present disclosure, which shall be covered by the protection scope of the present disclosure. Therefore, the protection scope of this application shall be subject to the protection scope of the appended claims.

## Claims

1. A method for wireless communication, performed by a terminal device, the method comprising:
activating N capability sets in M capability sets supported by the terminal device;
wherein M and N are positive integers, M≥2, N=1, or N≥2 and N<M.

2. The method according to claim 1, wherein at least some of capability sets in the M capability sets are associated with each other.

3. The method according to claim 1 or 2, wherein in a case where N≥2, the N capability sets are associated capability sets.

4. The method according to any one of claims 1 to 3, wherein
different capability sets in the M capability sets correspond to different services; or
different capability sets in the M capability sets correspond to different application scenarios; or
different capability sets in the M capability sets correspond to different radio access technologies; or
different capability sets in the M capability sets correspond to different hardware resource slicing requirements; or
different capability sets in the M capability sets correspond to different radio resource control (RRC) connection states; or
different capability sets in the M capability sets correspond to different communication parameters; or
different capability sets in the M capability sets correspond to different quality of service (QoS) requirements; or
different capability sets in the M capability sets correspond to different radio bearers (RBs); or
different capability sets in the M capability sets correspond to different bandwidth parts (BWPs); or
different capability sets in the M capability sets correspond to different terminal operating frequency bands; or
different capability sets in the M capability sets correspond to different communication subsystems.

5. The method according to claim 4, wherein in a case where the different capability sets in the M capability sets correspond to the different services, activation and/or switching of the capability sets in the M capability sets is based on a currently performed service type.

6. The method according to claim 4, wherein in a case where the different capability sets in the M capability sets correspond to the different application scenarios, activation and/or switching of the capability sets in the M capability sets is based on a current application scenario.

7. The method according to claim 4, wherein in a case where the different capability sets in the M capability sets correspond to the different radio access technologies, activation and/or switching of the capability sets in the M capability sets is based on a radio access technology currently in use.

8. The method according to claim 4, wherein in a case where the different capability sets in the M capability sets correspond to the different hardware resource slicing requirements, activation and/or switching of the capability sets in the M capability sets is based on required hardware resources.

9. The method according to claim 4, wherein in a case where the different capability sets in the M capability sets correspond to the different RRC connection states, activation and/or switching of the capability sets in the M capability sets is based on a current RRC connection state.

10. The method according to claim 4, wherein in a case where the different capability sets in the M capability sets correspond to the different communication parameters, activation and/or switching of the capability sets in the M capability sets is based on a communication parameter currently in use.

11. The method according to claim 4, wherein in a case where the different capability sets in the M capability sets correspond to the different QoS requirements, activation and/or switching of the capability sets in the M capability sets is based on a required QoS.

12. The method according to claim 4, wherein in a case where different capability sets in the M capability sets correspond to the different RBs, activation and/or switching of the capability sets in the M capability sets is based on an established RB.

13. The method according to claim 4, wherein in a case where the different capability sets in the M capability sets correspond to the different BWPs, activation and/or switching of the capability sets in the M capability sets is based on activated BWPs.

14. The method according to claim 4, wherein in a case where the different capability sets in the M capability sets correspond to the different terminal operating frequency bands, activation and/or switching of the capability sets in the M capability sets is based on an operating frequency band of the terminal device.

15. The method according to claim 4, wherein in a case where the different capability sets in the M capability sets correspond to the different communication subsystems, activation and/or switching of the capability sets in the M capability sets is based on a communication subsystem corresponding to the terminal device.

16. The method according to any one of claims 1 to 15, wherein prior to activating the N capability sets, the method further comprises:
receiving first information, wherein the first information is for instructing the terminal device to activate the N capability sets in the M capability sets supported by the terminal device.

17. The method according to claim 16, wherein the first information is parameter information for establishing an RB, or the first information is carried by non-access stratum (NAS) signaling.

18. The method according to claim 17, wherein in a case where the first information is carried by the NAS signaling, the NAS signaling is one of the following: service request signaling, protocol data unit (PDU) session establishment signaling, NAS signaling during the PDU session establishment process, PDU session modification signaling, or NAS signaling during the PDU session modification process.

19. The method according to any one of claims 1 to 18, wherein prior to activating the N capability sets, the method further comprises:
reporting the M capability sets supported by the terminal device.

20. The method according to claim 19, wherein reporting the M capability sets supported by the terminal device comprises:
periodically reporting the M capability sets supported by the terminal device; or
reporting the M capability sets supported by the terminal device by condition-triggered reporting; or
reporting the M capability sets supported by the terminal device by event-triggered reporting.

21. The method according to claim 19, wherein reporting the M capability sets supported by the terminal device comprises:
reporting the M capability sets supported by the terminal device via RRC signaling or NAS signaling.

22. The method according to claim 21, wherein in a case where the terminal device reports the M capability sets supported by the terminal device via the RRC signaling, the RRC signaling is RRC signaling during an RRC connection establishment process, or the RRC signaling is RRC signaling upon establishment of an RRC connection.

23. The method according to claim 21, wherein in a case where the terminal device reports the M capability sets supported by the terminal device via the NAS signaling, the NAS signaling is one of: service request signaling, PDU session establishment signaling, NAS signaling during the PDU session establishment process, PDU session modification signaling, or NAS signaling during the PDU session modification process.

24. The method according to claim 19, wherein reporting the M capability sets supported by the terminal device comprises:
reporting the M capability sets supported by the terminal device during a random access process.

25. The method according to claim 19, wherein reporting the M capability sets supported by the terminal comprises:
reporting the M capability sets supported by the terminal device to a target base station via a source base station.

26. The method according to any one of claims 1 to 25, wherein each capability set in the M capability sets comprises at least one of the following information elements: a supported bandwidth, a number of antennas, a semi-duplex capability, a mobility, a processing time, a coding, a modulation scheme, a measurement capability, an air interface technology, a basic parameter set, a receiver architecture, a receiver type, a receiver capability, a maximum transmit power, or a supported feature;
wherein at least some of the information elements in different capability sets in the M capability sets have different values.

27. A method for wireless communication, performed by a network device, the method comprising:
acquiring M capability sets supported by a terminal device;
determining N capability sets activated in the M capability sets;
wherein M and N are positive integers, M≥2, N=1, or N≥2 and N<M.

28. The method according to claim 27, wherein at least some of capability sets in the M capability sets are associated with each other.

29. The method according to claim 27 or 28, wherein in a case where N≥2, the N capability sets are associated capability sets.

30. The method according to any one of claims 27 to 29, wherein
different capability sets in the M capability sets correspond to different services; or
different capability sets in the M capability sets correspond to different application scenarios; or
different capability sets in the M capability sets correspond to different radio access technologies; or
different capability sets in the M capability sets correspond to different hardware resource slicing requirements; or
different capability sets in the M capability sets correspond to different radio resource control (RRC) connection states; or
different capability sets in the M capability sets correspond to different communication parameters; or
different capability sets in the M capability sets correspond to different quality of service (QoS) requirements; or
different capability sets in the M capability sets correspond to different radio bearers (RBs); or
different capability sets in the M capability sets correspond to different bandwidth parts (BWPs); or
different capability sets in the M capability sets correspond to different terminal operating frequency bands; or
different capability sets in the M capability sets correspond to different communication subsystems.

31. The method according to claim 30, wherein in a case where the different capability sets in the M capability sets correspond to the different services, activation and/or switching of the capability sets in the M capability sets is based on a currently performed service type.

32. The method according to claim 30, wherein in a case where the different capability sets in the M capability sets correspond to the different application scenarios, activation and/or switching of the capability sets in the M capability sets is based on a current application scenario.

33. The method according to claim 30, wherein in a case where the different capability sets in the M capability sets correspond to the different radio access technologies, activation and/or switching of the capability sets in the M capability sets is based on a radio access technology currently in use.

34. The method according to claim 30, wherein in a case where the different capability sets in the M capability sets correspond to the different hardware resource slicing requirements, activation and/or switching of the capability sets in the M capability sets is based on required hardware resources.

35. The method according to claim 30, wherein in a case where the different capability sets in the M capability sets correspond to the different RRC connection states, activation and/or switching of the capability sets in the M capability sets is based on a current RRC connection state.

36. The method according to claim 30, wherein in a case where the different capability sets in the M capability sets correspond to the different communication parameters, activation and/or switching of the capability sets in the M capability sets is based on a communication parameter currently in use.

37. The method according to claim 30, wherein in a case where the different capability sets in the M capability sets correspond to the different QoS requirements, activation and/or switching of the capability sets in the M capability sets is based on a required QoS.

38. The method according to claim 30, wherein in a case where different capability sets in the M capability sets correspond to the different RBs, activation and/or switching of the capability sets in the M capability sets is based on an established RB.

39. The method according to claim 30, wherein in a case where the different capability sets in the M capability sets correspond to the different BWPs, activation and/or switching of the capability sets in the M capability sets is based on activated BWPs.

40. The method according to claim 30, wherein in a case where the different capability sets in the M capability sets correspond to the different terminal operating frequency bands, activation and/or switching of the capability sets in the M capability sets is based on an operating frequency band of the terminal device.

41. The method according to claim 30, wherein in a case where the different capability sets in the M capability sets correspond to the different communication subsystems, activation and/or switching of the capability sets in the M capability sets is based on a communication subsystem corresponding to the terminal device.

42. The method according to any one of claims 27 to 41, wherein acquiring the M capability sets supported by the terminal device comprises:
receiving the M capability sets reported by the terminal device.

43. The method according to claim 42, wherein receiving the M capability sets reported by the terminal device comprises:
receiving the M capability sets reported by the terminal device by periodic reporting; or
receiving the M capability sets reported by the terminal device by condition-triggered reporting; or
receiving the M capability sets reported by the terminal device by event-triggered reporting.

44. The method according to claim 42, wherein receiving the M capability sets reported by the terminal device comprises:
receiving the M capability sets reported by the terminal device via RRC signaling or non-access stratum (NAS) signaling.

45. The method according to claim 44, wherein in a case where the terminal device reports the M capability sets supported by the terminal device via the RRC signaling, the RRC signaling is RRC signaling during an RRC connection establishment process, or the RRC signaling is RRC signaling upon establishment of an RRC connection.

46. The method according to claim 44, wherein in a case where the terminal device reports the M capability sets supported by the terminal device via the NAS signaling, the NAS signaling is one of the following: service request signaling, protocol data unit (PDU) session establishment signaling, NAS signaling during the PDU session establishment process, PDU session modification signaling, or NAS signaling during the PDU session modification process.

47. The method according to claim 42, wherein receiving the M capability sets reported by the terminal device comprises:
receiving the M capability sets reported by the terminal device during a random access process.

48. The method according to claim 42, wherein receiving the M capability sets reported by the terminal device comprises:
receiving the M capability sets reported by the terminal device via other network devices.

49. The method according to any one of claims 27 to 48, wherein the method further comprises:
sending first information, wherein the first information is for instructing the terminal device to activate the N capability sets in the M capability sets supported by the terminal device.

50. The method according to claim 49, wherein the first information is parameter information for establishing an RB, or the first information is carried by NAS signaling.

51. The method according to claim 50, wherein in a case where the first information is carried by the NAS signaling, the NAS signaling is one of: service request signaling, PDU session establishment signaling, NAS signaling during the PDU session establishment process, PDU session modification signaling, or NAS signaling during the PDU session modification process.

52. The method according to any one of claims 27 to 51, wherein each capability set in the M capability sets comprises at least one of the following information elements: a supported bandwidth, a number of antennas, a semi-duplex capability, a mobility, a processing time, a coding, a modulation scheme, a measurement capability, an air interface technology, a basic parameter set, a receiver architecture, a receiver type, a receiver capability, a maximum transmit power, and a supported feature;
wherein at least some of the information elements in different capability sets in the M capability sets have different values.

53. A terminal device, comprising:
a processing unit, configured to activate N capability sets in M capability sets supported by the terminal device;
wherein M and N are positive integers, M≥2, N=1, or N≥2 and N<M.

54. A network device, comprising:
a communication unit, configured to acquire the M capability sets supported by the terminal device; and
a processing unit, configured to determine the N capability sets activated in the M capability sets;
wherein M and N are positive integers, M≥2, N=1, or N≥2 and N<M.

55. A terminal device, comprising: a processor and a memory configured to store at least one computer program, wherein the processor, when loading and running the at least one computer program from the memory, causes the terminal device to perform the method as defined in any one of claims 1 to 26.

56. A network device, comprising: a processor and a memory configured to store at least one computer program, wherein the processor, when loading and running the at least one computer program from the memory, causes the network device to perform the method as defined in any one of claims 27 to 52.

57. A chip, comprising: a processor, wherein the processor, when loading and running at least one computer program from a memory, causes a device equipped with the chip to perform the method as defined in any one of claims 1 to 26.

58. A chip, comprising: a processor, wherein the processor, when loading and running at least one computer program from a memory, causes a device equipped with the chip to perform the method as defined in any one of claims 27 to 52.

59. A computer-readable storage medium, storing at least one computer program, wherein the at least one computer program, when loaded and run by a computer, causes the computer to perform the method as defined in any one of claims 1 to 26.

60. A computer-readable storage medium, storing at least one computer program, wherein the at least one computer program, when loaded and run by a computer, causes the computer to perform the method as defined in any one of claims 27 to 52.

61. A computer program product, comprising: at least one computer program instruction, wherein the at least one computer program instruction, when loaded and executed by a computer, causes the computer to perform the method as defined in any one of claims 1 to 26.

62. A computer program product, comprising: at least one computer program instruction, wherein the at least one computer program instruction, when loaded and executed by a computer, causes the computer to perform the method as defined in any one of claims 27 to 52.

63. A computer program, wherein the computer program, when loaded and run by a computer, causes the computer to perform the method as defined in any one of claims 1 to 26.

64. A computer program, wherein the computer program, when loaded and run by a computer, causes the computer to perform the method as defined in any one of claims 27 to 52.
